(19) Europäisches Patentamt
European Patent Office
Office européen des brevets

(11) **EP 3 564 910 B1**

(12) **EUROPÄISCHE PATENTSCHRIFT**

(45) Veröffentlichungstag und Bekanntmachung des Hinweises auf die Patenterteilung:
**13.08.2025  Patentblatt 2025/33**

(51) Internationale Patentklassifikation (IPC):
**G07B 17/00** (2006.01)  **G04B 13/00** (2006.01)
**G06F 1/16** (2006.01)

(21) Anmeldenummer: **19172287.5**

(22) Anmeldetag: **02.05.2019**

(52) Gemeinsame Patentklassifikation (CPC):
**G07B 17/00193; G04B 13/00; G06F 1/1601;**
G07B 2017/00298

(54) **GUTVERARBEITUNGSGERÄT MIT EINEM SCHWENKBAREN DISPLAY UND VERFAHREN ZUR ERMITTLUNG DER NEIGUNG DES DISPLAYS**

GOODS PROCESSING APPARATUS WITH A PIVOTING DISPLAY AND METHOD FOR DETERMINING THE INCLINATION OF THE DISPLAY

DISPOSITIF DE TRAITEMENT DE MARCHANDISES DOTÉ D'UN AFFICHAGE PIVOTANT ET PROCÉDÉ DE DÉTERMINATION DE L'INCLINAISON DE L'AFFICHAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2018  DE 202018102463 U**
**30.04.2019  DE 102019003221**

(43) Veröffentlichungstag der Anmeldung:
**06.11.2019  Patentblatt 2019/45**

(60) Teilanmeldung:
**20173140.3 / 3 712 859**

(73) Patentinhaber: **Francotyp-Postalia GmbH**
**13089 Berlin (DE)**

(72) Erfinder:
• **Ortmann, Axel**
**13189 Berlin (DE)**
• **Muhl, Wolfgang**
**16540 Hohen Neuendorf (DE)**
• **Lorenzen, Matthias**
**12357 Berlin (DE)**
• **Krumholz, Wolf-Alexander**
**16761 Hennigsdorf (DE)**
• **Von der Waydbrink, Karsten**
**14482 Potsdam (DE)**
• **Schilling, Tilmann**
**10243 Berlin (DE)**

(56) Entgegenhaltungen:
DE-U1- 202010 000 898    DE-U1- 29 822 702
JP-A- 2017 015 127    US-A1- 2014 176 424

EP 3 564 910 B1

**Beschreibung**

Die Erfindung betrifft ein Gutverarbeitungsgerät mit einem schwenkbaren Display gemäß dem Oberbegriff des Patentanspruchs 1. Das Gutverarbeitungsgerät ist mit einer Tintendruckvorrichtung zur Erzeugung von Abdrucken auf Druckträgern, einer Steuereinheit und Ein- und Ausgabemitteln ausgestattet. Die Tintendruckvorrichtung besteht aus einem Druckmodul, einem Transportmodul für Druckträger, einem Andruckmodul zum Andrücken der Druckträger an das Transportmodul. Das Gutverarbeitungsgerät ist beispielsweise eine smarte Frankiermaschine und das Ein- und Ausgabemittel ein schwenkbares Display.

Wenn nachfolgend von einem Druckträger gesprochen wird, sollen dadurch nicht andere Druckmedien, wie flache Güter, Poststücke, Briefkuverts, Postkarten und dergleichen davon ausgeschlossen werden, in einem druckenden Gutverarbeitungsgerät verarbeitet zu werden, welches die beanspruchten erfinderischen Merkmale aufweist. Der Druckträger wird während des Druckens in Transportrichtung transportiert.

Mit der Jetmail wurde bereits im Jahre 1997 eine Frankiermaschine vorgestellt, die mit einem großflächigen Display ausgestattet ist, wobei die Feldeinteilung der Schirmbilder variabel ist, siehe EP 718 801 B1 (unser Zeichen 8409-EP). Über eine Menü-Taste wird das Hauptmenü aufgerufen, welches eine Auflistung mehrerer Grundmenüs darstellt, zu welchen durch eine Benutzereingabe direkt verzweigt wird. Ein weiterer Hardkey dient zur Auswahl des gewünschten Grundmenüs, wobei die Auswahl entweder mittels einer Enter-Taste bestätigt werden oder mittels einer weiteren Taste (Hardkey) verändert werden kann. Die Schirmbilder der einzelnen Grundmenüs enthalten eine Aufteilung in Felder variabler Größe, wobei den Feldern Softkeys zugeordnet sind, damit der Benutzer eine weitere Auswahl oder Parametereinstellung vornehmen kann. Das Userinterface ist insgesamt sehr voluminös ausgestaltet.

Bekannt ist auch eine Anordnung einer Folientastatur unterhalb des Displays eines Sinclair ZX81-Heimcomputers des britischen Herstellers Sinclair Research Ltd.

Ein Softkey ähnelt somit einer Schaltfläche eines Smart Phones, mit dem Unterschied, dass eine reale Taste außerhalb des Bildschirms verwendet wird. Bei Smart Phones und ähnlichen Kommunikationsgeräten sind Displays mit einem Rand und randlose Displays (Samsung Galaxy Edge) gebräuchlich. Weitere Eingabemittel können bei letzterem nur noch in der Gehäusekante eines Kommunikationsgeräts untergebracht werden.

Eine Frankiermaschine des Typs Postbase der Anmelderin ist bereits mit einem Touchscreen als Ein- und Ausgabemittel ausgestattet. Ein Touchscreen ist ein berührungsempfindliches Display, mit dem Eingaben durch Berührung und Ausgaben durch Anzeigen eines Menue- und/oder Schirmbildes ermöglicht werden.

Aus dem deutschen Gebrauchsmuster DE 20 2010 000 898 U1 ist ein Postbearbeitungsgerät mit einem Display bekannt. Das Display ist in einem Displaygehäuse untergebracht, das manuell verstellbar ist, so dass der Betrachtungswinkel des Displays veränderbar ist. Das Displaygehäuse weist eine Fensteröffnung auf, durch welche ein Touchscreen sichtbar und berührbar ist, um Eingaben zu tätigen. Das Postbearbeitungsgerät weist ein Betätigungsmittel zum Umschalten zwischen Feststellbarkeit und Bewegbarkeit des Displaygehäuses, ein entriegelbares bzw. freigebbares Arretiermittel und ein elektro-mechanisches oder mechanisches Auslösemittel auf, wobei das Betätigungsmittel auf das Auslösemittel einwirkt, um das Arretiermittel zu entriegeln, zu lösen oder freizugeben, damit das Displaygehäuse im Postbearbeitungsgerät bewegbar ist. Bei Betätigung des Betätigungsmittels (Druck-Taste) wird eine Druckfeder zusammengedrückt und das Arretiermittel gelangt außer Eingriff mit dem Displaygehäuse. Als Alternative wurde in dem deutschen Gebrauchsmuster auch schon eine motorische Verstellung der Neigung des Displays vorgeschlagen. Eine Schnecke eines Schneckengetriebes wird von einem Motor angetrieben, der von einer Steuerung über Ansteuerleitungen angesteuert wird. Die Steuerung ist mit einem Schalter über elektrische Leitungen verbunden, wobei der Schalter zum Beispiel durch ein Betätigungsmittel (Taste) eingeschaltet wird, was die Steuerung entsprechend interpretiert. Ein fest arretiertes Display darf keinem zu starken Druck bei einer Eingabe durch einen Finger eines Bedieners ausgesetzt werden, da entweder das Displaygehäuse bewegt und das Schneckengetriebe beschädigt oder zumindest der Neigungswinkel des Displays ungewollt verändert würde, was dessen Betrachtung erschwert. Das Display ist in nachteiliger Weise nur in groben Stufen schwenkbar. Bei einem Lösen der Arretierung wird durch Federkraft ein Ausgangszustand der Neigung eingestellt, der meist nicht der gewünschten Neigung entspricht.

In DE 20 2010 000898 U1 wird ein Postbearbeitungsgerät mit einem Display beschrieben, welches mit einem bezüglich des Betrachtungswinkels verstellbaren Displaygehäuses ausgestattet ist. Das Gerät weist ein Betätigungsmittel zum Umschalten zwischen Feststellbarkeit und Bewegbarkeit des Gehäuses, ein entriegelbares bzw. freigebbares Arrettiermittel und ein mechanisches oder elektro-mechanisches Auslösemittel auf. In einigen Ausführungen umfasst die Vorrichtung ein Dämpfungselement, welches zur Dämpfung der Bewegung des Displays vorgesehen ist, wobei Dämpfungselemente in bestimmten Ausführungsformen ein Zahnrad ausweisen, um die gewünschte Funktion zu erhalten.

Die DE 298 22 702 U1 beschreibt schwenkbare LCD-Monitore als Anzeigeeinheit bei Computern, Laptops, Kassensystem und weiteren Anwendungen. Durch die Erfindung soll eine Möglichkeit geschaffen werden, schwenk- und kippbare LCD-Monitore zu schaffen, dessen Bildinhalt sich nach dem Drehen des Monitors von Quer- in Hochformat oder nach dem Kippen um mehr als 90 Grad nach hinten, ohne weitere Bedienfunktionen automatisch lagerichtig zum Betrachter einstellt. Zu diesem Zweck sollen Sensoren im Monitorgehäuse angeordnet werden und so dem Lagezustand entsprechende auswertbare Signale zur Verfügung gestellt werden.

Aus US 2014/176424 A ist ein Verfahren zum Einstellen eines Anzeigebildschirms eines elektronischen Gerätes bekannt. Zunächst werden in einem aktuellen und einem vorherigen Bild eines Benutzers die Gesichtsbereiche erkannt und die Bewegungsrichtungen und den Bewegungswinkeln des Gesichts des Benutzers bestimmt. Daraufhin wird der Anzeigebildschirm entsprechend der Bewegungsrichtung und dem Bewegungswinkel des Nutzers gedreht. Der Rotationswinkel des Anzeigebildschirms wird durch einen Schwerkraftsensor der elektronischen Vorrichtung erhalten. Sobald der Rotationswinkel des Anzeigebildschirms gleich dem Bewegungswinkel des Gesichtes des Benutzers ist, wird das Drehen des Displays gestoppt.

In JP 2017 015127 A wird ein Drehantriebsmechanismus beschrieben, der zum Drehen eines Antriebkörpers, wie zum Beispiel eines Display-Hauptkörpers, als Antriebsquelle eines Motors für ein Fahrzeuganzeigegerät bereitgestellt werden soll. Die beschriebene Vorrichtung umfasst einen Motor als Antriebsquelle, ein Schneckengetriebe, ein Kupplungszahnrad, das mit dem Schneckengetriebe ineinander greift, ein koaxial zu dem Kupplungszahnrad angeordnetes erstes Zahnrad und ein zweites Zahnrad.

Die Aufgabe besteht darin, die Mängel der bekannten Lösungen zu beseitigen und ein Gutverarbeitungsgerät zu entwickeln, dessen Displaygehäuse um eine Drehachse schwenkbar ist, wobei der Neigungswinkel des Displays gesteuert durch eine Steuereinheit motorisch und manuell verstellbar ist. Das Gutverarbeitungsgerät, insbesondere eine Frankiermaschine, soll sich mit smarten Features an die Bedürfnisse der Kunden individuell anpassen lassen. Die Frankiermaschine soll mit geeigneten zusätzlichen Mitteln ausgestattet und deren Software soll mit einem Programm weiter qualifiziert werden, um die Bedienung der Frankiermaschine über ein Displaymodul zu verbessern. Das Displaymodul soll ein schwenkbares flaches Display als Userinterface umfassen. Das Userinterface soll mit zusätzlichen Eingabemitteln realisiert werden soll. Das Displaymodul soll außerdem vor Beschädigungen geschützt werden, die durch ein manuelles Schwenken des Displays bei hoher Krafteinwirkung entstehen könnten. Auch soll bei einer Eingabe durch Berührung des Touchscreens des Displays, d.h. bei einer geringen Krafteinwirkung, dessen Neigung unverändert bleiben.

Des Weiteren besteht die Aufgabe darin, Daten zu ermitteln, die dem Winkel eines Bauteils, insbesondere eines Displays, an einem Gutverarbeitungsgerät entsprechen, um diese zu speichern.

Der Neigungswinkel kann nach dem Stand der Technik mit den Messdaten z.B. eines Neigungssensors (=Beschleunigungssensor) unter Anwendung von trigonometrischen Funktionen berechnet werden. Durch die Nichtlinearität der trigonometrischen Funktionen, erhält man aber in den Wendepunkten (0°- und 90°-Neigung) bei der Umrechnung sehr ungenaue Werte mit großen Abweichungen bei kleinen Änderungen. Verstärkt wird dieser Effekt durch die Tatsache, dass typische Beschleunigungssensoren nur Werte bis 2 Stellen nach dem Komma ausgeben.

Es soll also eine möglichst genaue Ermittlung der Neigung eines Bauteils, insbesondere eines Displays, aus Beschleunigungswerten des Neigungssensors erreicht werden. Dies soll insbesondere auch im Bereich der Extrema (Wendepunkte bzw. senkrechtes und waagerechtes Display) möglich sein.

Der Benutzer eines Gutverarbeitungsgeräts mit einem schwenkbaren Display mit den erfindungsgemäßen Merkmalen kann so durch eine Eingabe am Display eine Neigung einstellen, die für die Anwendungssituation für ihn optimal ist. Durch die ermittelten Daten kann so ein für den Benutzer optimaler Betrachtungswinkel festgestellt werden. Die so ermittelten Werte können durch die Abspeicherung später wieder reproduziert werden. Der Neigungswinkel soll dabei möglichst genau bestimmt werden.

Bei einem Gutverarbeitungsgerät mit schwenkbarem Display soll so die Ermittlung des aktuellen Neigungswinkels ermöglicht werden. Dieser Wert soll dann später abrufbar sein. Dadurch soll der ermittelte Neigungswinkel des Displays zum Beispiel durch Eingabe durch den Benutzer, beim Starten oder AusschaltVorgang des Gutverarbeitungsgerätes ansteuerbar sein. Der Benutzer muss das Display nicht mehr manuell schwenken. Zudem schwenkt das Display motorisch angetrieben dadurch immer auf die Position, die identisch ist mit dem zuvor ermittelten Neigungswert.

Die Aufgabe wird mit den Merkmalen des Gutverarbeitungsgeräts nach Patentanspruch 1 gelöst.

Das Gutverarbeitungsgerät ist mit einer Tintendruckvorrichtung zur Erzeugung von Abdrucken auf Druckträgern, einer Steuereinheit und Ein- und Ausgabemitteln ausgestattet. Ein Displaymodul weist einen Displaymodulträger, einen schwenkbaren Displayhalter und ein Displaygehäuse auf, wobei ein Display-rand um einen Displaybildschirm angeordnet ist und ein Displaygehäuserahmen den Displayrand umgibt. Mindestens ein zusätzliches Betätigungsmittel des Displaymoduls ist vorgesehen, um ein motorisches Schwenken des Displaybildschirms manuell auszulösen. Das zusätzliche Betätigungsmittel kann beispielsweise auf dem Displayrand angeordnet werden.

Es ist vorgesehen, dass die Steuereinheit einen Prozessor, einen Programmspeicher, einen Arbeitsspeicher, eine Ein-/Ausgabeschaltung und einen nicht-flüchtigen Speicher zur Speicherung von Einstelldaten aufweist, und wobei der Programmspeicher ein Programm zur automatischen Einstellung einer von einem jeweiligen Bediener des Geräts abhängigen Displayneigung aufweist.

Im Displaymodul ist mindestens ein Sensor zur Detektion der Displayneigung, vorzugsweise des Neigungswinkels $\alpha$, vorgesehen. Eine Horizontale H liegt orthogonal zu einer Transportrichtung x von Druckträgern und erstreckt sich dabei parallel zur y-Richtung.

Der Neigungswinkel $\alpha$ einer auf einer Oberfläche des Displaybildschirms liegenden Neigungsgeraden N zu der Horizontalen H wird in einer bevorzugten Variante der Erfindung zur Definition der Neigung vorgesehen. Damit soll aber nicht ausgeschlossen werden, dass in einer anderen Variante der Erfindung die Neigung des Displays alternativ definiert wird.

Der Sensor und ein Motor sind elektrisch über die Ein-/Ausgabeschaltung mit der Steuereinheit verbunden. Der Displaybildschirm ist elektrisch mit der Steuereinheit verbunden. Der Motor ist zum motorischen Schwenken des Displaybildschirms mit einem selbsthemmenden Getriebe ausgestattet, das die Umdrehungen des Motors untersetzt und über eine Getriebewelle an einen Überlastschutz abgibt, wobei der Überlastschutz als Reib- oder Rutschkupplung auf einer Getriebewelle angeordnet ist und ein Zahnritzel des Überlastschutzes vorgesehen ist, dass mit einem Zahnradteilsegment des schwenkbaren Displayhalters in Eingriff steht.

Weiterhin sind Eingabemittel zur Eingabe von manuellen Eingabedaten, von Sensordaten, von Identitätsmerkmalen bzw. einer persönlichen IdentifikationsNummer (PIN) des Bedieners des Gutverarbeitungsgeräts vorgesehen. Das Display ist ein Bestandteil eines Displaymoduls. Es ist als Touchscreen ausgebildet und dient somit auch als Eingabemittel. Die Eingabemittel des Displays bestehen einerseits aus den jeweils angezeigten Bedienfeldern des Touchscreens und andererseits aus zusätzlichen Betätigungsmitteln, die am Display-Rand ausgebildet sind, wobei die Funktion des zusätzlichen Eingabemittels fest durch eine Symbolbedruckung auf dem Display-Rand vorgegeben ist.

Ein Displaygehäuse oder ein Displayhalter des Displaymoduls ist mit einem Sensor zur Detektion der Displayneigung, vorzugweise des Neigungswinkels $\alpha$ ausgestattet. Der Sensor ist mit einer Steuereinheit des Gutverarbeitungsgeräts betriebsmäßig verbunden. Das Displaymodul besteht aus einem Displaymodulträger und einem auf diesem schwenkbar montierten Displayhalter mit dem Displaygehäuse. Das Displaygehäuse besteht aus einem Rahmen mit einer Rückwand. Der Displayhalter ist an der Rückwand montiert und weist mechanische Mittel auf, die ein motorisches Verändern des Neigungswinkels der Oberfläche des Displays zu einer Horizontalen ermöglichen. Im Trägerteil des Displaymoduls ist ein Motor mit einem mechanisch gekoppelten Getriebe sowie mit einem Überlastschutz angeordnet. Das Touchscreen-Display ist dadurch automatisch motorisch schwenkbar. Nach Eingabe einer persönlichen Identifikations-Nummer (PIN) oder von Identitätsmerkmalen eines Bedieners des Gutverarbeitungsgeräts wird das Display motorisch geschwenkt bis ein bedienerabhängig vorbestimmter Neigungswinkel erreicht wird. Ein geeigneter Sollwert des Neigungswinkels des Displays, der für einen jeden Benutzer unterschiedlich sein kann, liegt in einem Speicher der Steuereinheit des Gutverarbeitungsgeräts nichtflüchtig gespeichert vor. Das hat den Vorteil, dass nach einem Einschalten der Neigungswinkel des Displays zu einer Horizontalen automatisch und bedienerabhängig eingestellt wird.

Durch die zusätzlichen Betätigungsmittel, die am Display-Rand ausgebildet sind, ist das Display beliebig motorisch schwenkbar. Ein Vorteil besteht im geringen Kraftaufwand zur Bedienung des Geräts über die zusätzlichen Betätigungsmittel. Ein weiterer Vorteil besteht in der feineren Abstufung der VerstellBewegung und somit eines Neigungswinkels einer auf der Oberfläche des Displaybildschirms liegenden Neigungsgeraden innerhalb eines schwenkbaren Bereichs zu einer Horizontalen in y-Richtung.

Per Hand kann der Neigungswinkel des Displays auch manuell weiter verändert werden, wobei der Überlastschutz vorgesehen ist, um das Displaymodul mit motorischer Verstellung vor Beschädigungen zu schützen, die durch ein manuelles Schwenken des Displays bei hoher Krafteinwirkung entstehen könnten. Ein weiterer Vorteil besteht darin, dass eine störende Licht-Reflexion beim Betrachten eines Schirmbildes vermieden werden kann, wobei die Licht-Reflexion von der Oberfläche des Displays ausgeht, weil der Neigungswinkel des Displays innerhalb eines schwenkbaren Bereichs auch manuell weiter verändert werden kann. In Reaktion auf ein Einschalten des Gutverarbeitungsgeräts, beispielsweise der Frankiermaschine, kann die Identität über eine persönliche Identifikationsnummer (PIN) des Bedieners ermittelt und dann das Display des Displaymoduls automatisch in eine definierte Neigungs-Position geschwenkt werden, wobei die Daten dieser Position bereits zuvor erfasst worden sind und von dem Bediener abhängig gespeichert vorliegen. Nach einem Ausschalten des Gutverarbeitungsgeräts bzw. der Frankiermaschine wird das Display der Display-Baugruppe automatisch in eine weitere vorbestimmte Position geschwenkt.

Alternativ kann nach einem Ausschalten des Gutverarbeitungsgeräts bzw. der Frankiermaschine das Display in der letzten Position verbleiben, in welche das Display zuvor geschwenkt worden war.

Zudem ist ein Verfahren zur Ermittlung der Neigung eines Bauteils, z.B. dem zuvor genannten Display, das mit einer Verarbeitungseinheit eines Geräts elektrisch verbunden ist, vorgesehen.

Zunächst gibt ein Neigungssensor einen digitalen Messwert jeweils für jede Achse an die Verarbeitungseinheit aus. Der Neigungssensor ist dabei an einem verstellbaren Bauteil vorgesehen, wobei das Bauteil um eine z-Achse eines kartesischen Koordinatensystems drehbar ist, und der Neigungssensor mindestens in Richtung der x-Achse und der y-Achse jeweils einen Messwertgeber aufweist.

Die beiden digitalen Messwerte in der Verarbeitungseinheit werden dann verarbeitet, wobei ein gültiger Messwert für die Neigung des Bauteils aus den digitalen Messwerten abgeleitet wird.

Schließlich wird der abgeleitete Messwerts für die Neigung des Bauteils in dem Gerät abgespeichert.

Die Verarbeitungseinheit kann die Steuereinheit (beispielsweise das Mainboard) eines Gutverarbeitungsgerätes sein. Das verbundene Bauteil kann das Display des Gutverarbeitungsgerätes sein.

Der abgeleitete Messwert kann in einer vorteilhaften Weise für die Neigung des Bauteils aus den beiden digitalen Messwerten berechnet und gespeichert werden, so dass eine Reproduktion der Neigung auch nach einer Verstellung der Neigung des Bauteils von Hand möglich ist.

In einer weiteren vorteilhaften Weise kann in der Verarbeitungseinheit der gültige Messwert für die Neigung des Bauteils in Grad eines Neigungswinkels umgerechnet werden.

In einer weiteren vorteilhaften Weise kann der gültige Messwert für die Neigung des Bauteils mittels einer in einem nichtflüchtigen Speicher gespeicherten Tabelle in Grad eines Neigungswinkels umgesetzt und nichtflüchtig gespeichert werden.

In einer weiteren vorteilhaften Weise kann der gültige Messwert für die Neigung des Bauteils mittels der Verarbeitungseinheit und einer in einem nichtflüchtigen Speicher gespeicherten Formel in Grad eines Neigungswinkels umgerechnet und nichtflüchtig gespeichert werden.

In einer weiteren vorteilhaften Weise kann der gültige Messwert für die Neigung des Bauteils mittels der Verarbeitungseinheit und einer in einem nichtflüchtigen Speicher gespeicherten Formel in Grad eines Neigungswinkels umgerechnet und nichtflüchtig gespeichert werden.

In einer weiteren vorteilhaften Weise ist die Verarbeitungseinheit programmiert, eine Umrechnung der Wirkung der Erdbeschleunigung auf den jeweiligen Messwertgeber in Grad eines Neigungswinkels vorzunehmen.

In einem ersten Ausführungsbeispiel wird die Wirkung der Erdbeschleunigung auf den jeweiligen Messwertgeber gewichtet und dann aus den gewichteten Messwerten ein Mittelwert gebildet.

Dazu kann in vorteilhafter Weise der Mittelwert ein arithmetischer Mittelwert sein.

In einem zweiten Ausführungsbeispiel ist der abgeleitete Messwert für die Neigung des Bauteils, einer der beiden digitalen Messwerte, der die Neigung am genauesten wiedergibt.

Dazu kann in vorteilhafter Weise eine Auswahl zwischen den beiden digitalen Messwerten in der Verarbeitungseinheit erfolgen, wobei die digitalen Messwerte in vorgegebenen Messwertbereichen gültig sind, die zueinander unterschiedlich sind und dass der gültige Messwert für die Neigung des Bauteils in einem nicht-flüchtigen Speicher gespeichert wird, so dass eine Reproduktion der Neigung nach einer Verstellung der Neigung des Bauteils möglich ist.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigen:

Fig. 1,       perspektivische Darstellung einer Frankiermaschine mit montierten Display-modul von vorn rechts oben,

Fig. 2,       perspektivische Darstellung des Displaymoduls von vorn rechts oben,

Fig. 3,       perspektivische Darstellung des geschnittenen Displaymoduls von hinten, rechts oben, mit einem maximalen Neigungswinkel des Displays,

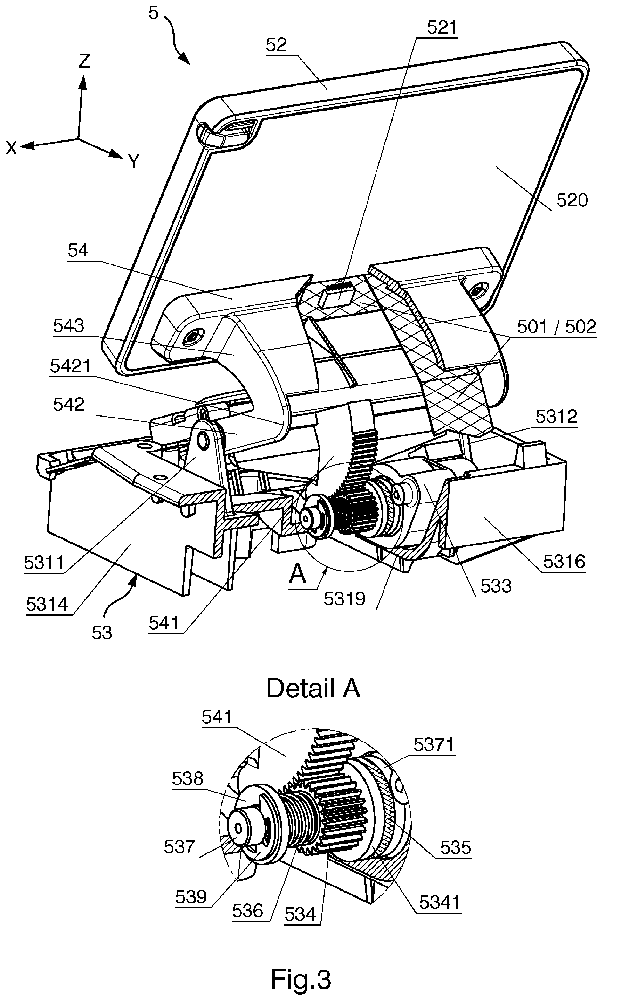

Fig. 3,       perspektivische Darstellung des geschnittenen Displaymoduls von hinten links oben,

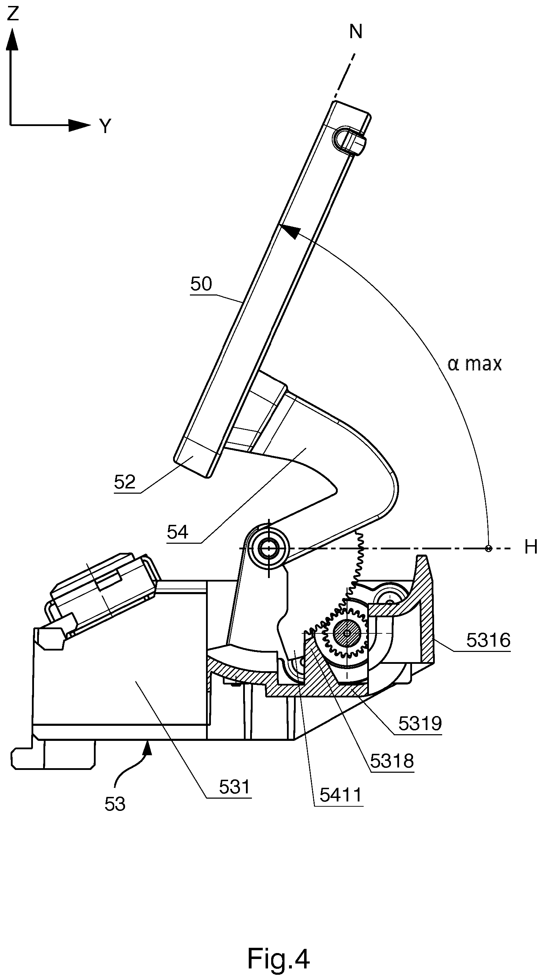

Fig. 4,       Seitenansicht des geschnittenen Displaymoduls von rechts, mit einem maximalen Neigungswinkel des Displays,

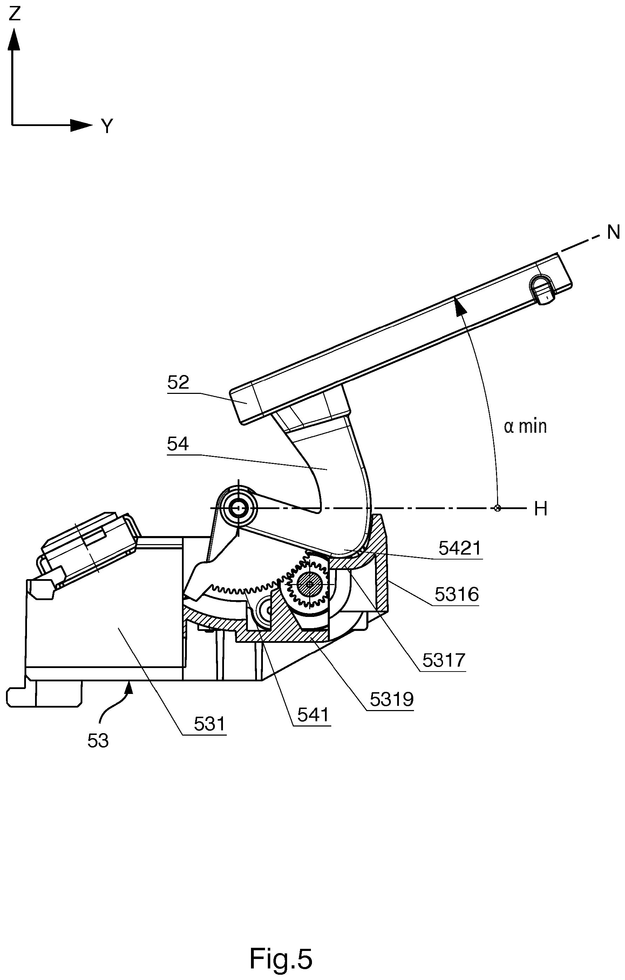

Fig. 5,       Seitenansicht eines geschnittenen Displaymoduls von rechts, mit einem minimalen Neigungswinkel des Displays,

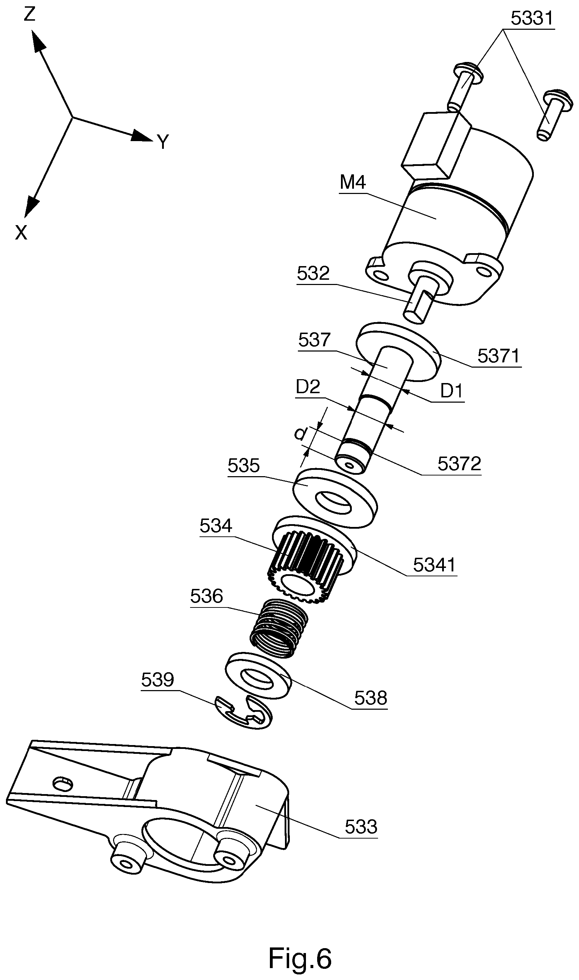

Fig. 6,       perspektivische und geschnittene Darstellung eines Überlastschutzes des Displaymoduls von hinten rechts oben,

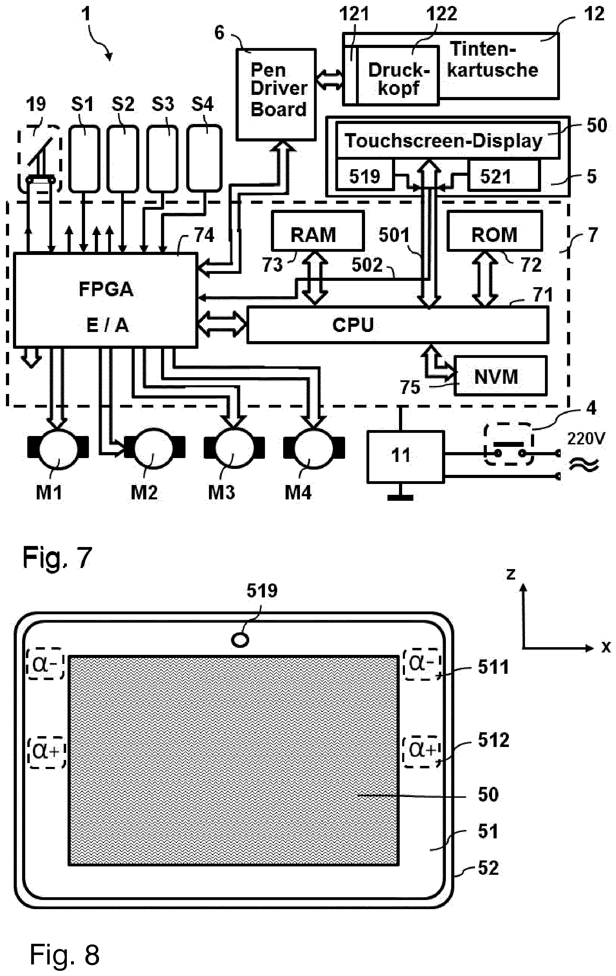

Fig. 7,       vereinfachtes Blockschaltbild einer Steuereinheit,

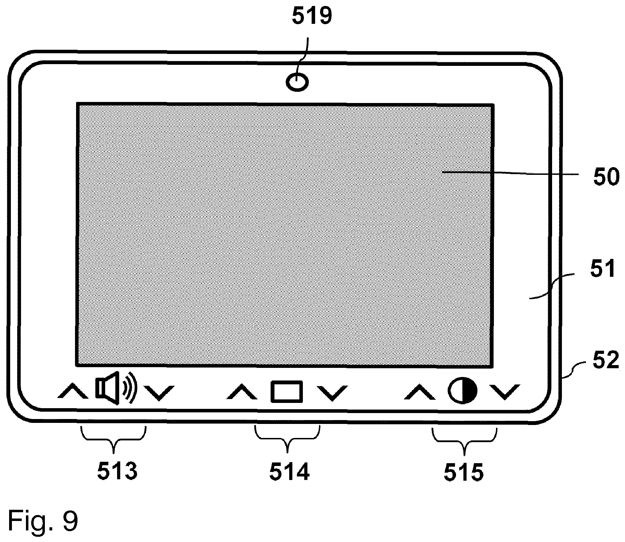

Fig. 8 und 9,   Display mit zusätzlichen Betätigungsmitteln,

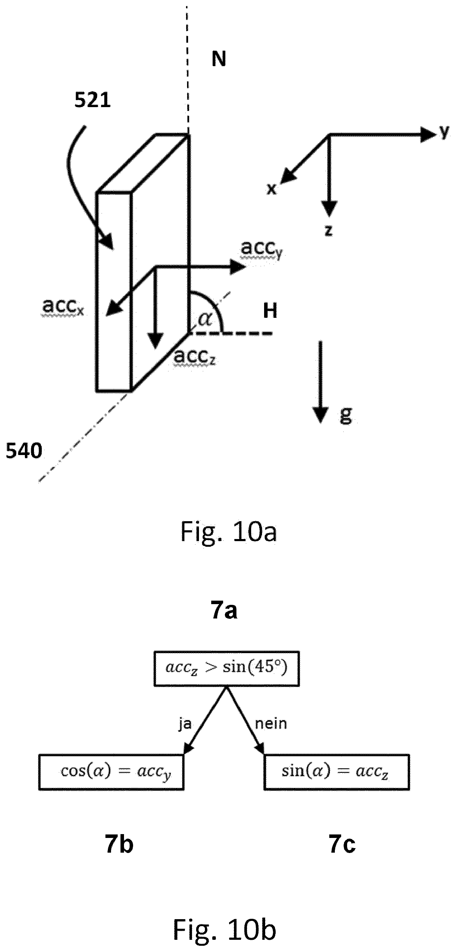

Fig. 10a,     schematische Darstellung eines Neigungssensors,

Fig. 10b,     Darstellung von Auswahlkriterium des zweiten Ausführungsbeispiels,

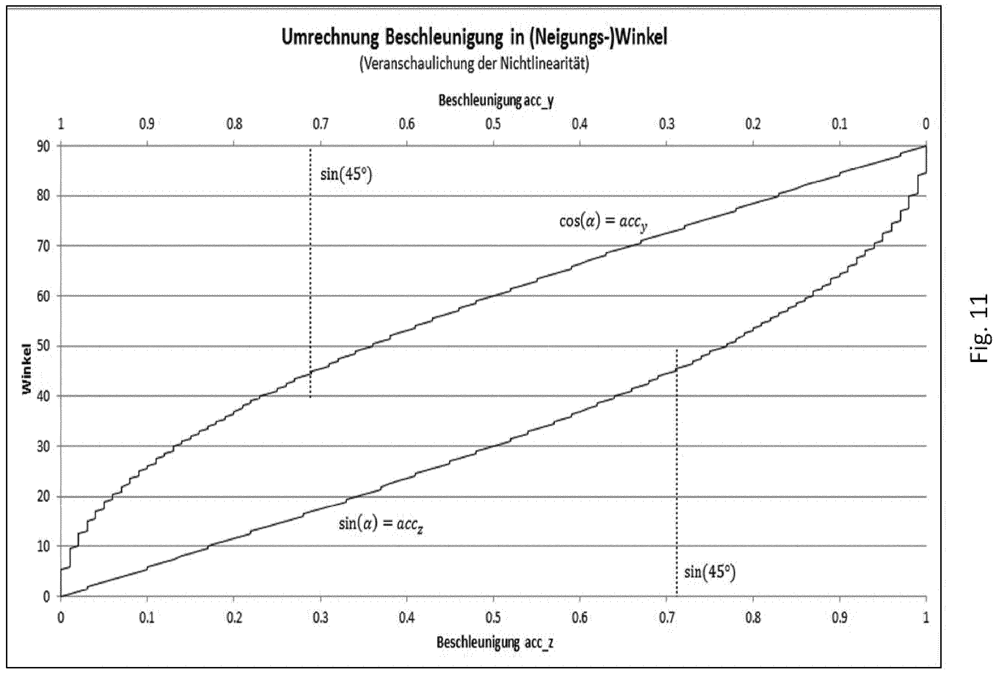

Fig. 11,      grafische Darstellung der Umrechnung der Beschleunigung in (Neigungs-)Winkel.

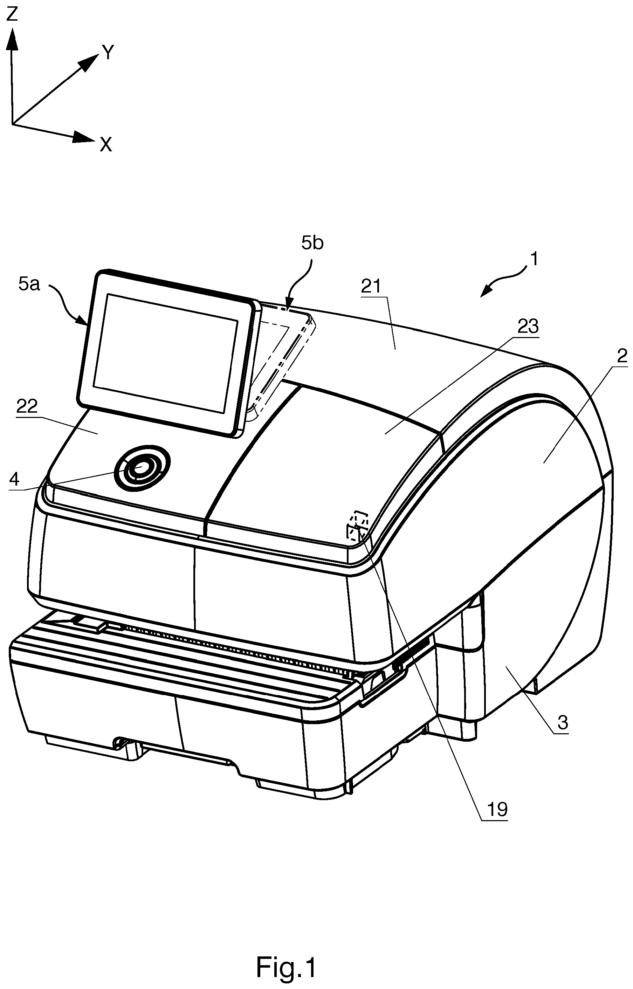

Die Fig. 1 zeigt eine perspektivische Darstellung einer Frankiermaschine 1 mit einem montierten Displaymodul von vorn rechts oben. In einer nicht gezeigten Weise erfolgt ein Transport von Druckträgern in Transportrichtung x eines kartesischen Koordinatensystems innerhalb der Frankiermaschine 1 bzw. eines druckenden Gutverarbeitungsgeräts. Die Frankiermaschine 1 hat eine Gehäuseoberschale 2, die in z-Richtung auf einer Gehäuseunterschale 3 montiert ist. Die Gehäuseoberschale 2 weist eine austauschbare Blende 21 auf der Oberseite der Frankiermaschine 1 nahe einer Rückseite auf, wobei sich die Blende 21 der Länge nach von einer stromaufwärts liegenden Kante bis zu einer stromabwärts liegenden Kante der Oberfläche der Frankiermaschine erstreckt. Die austauschbare Blende 21 hat eine tonnenförmig gewölbte Form und nimmt etwa die Hälfte der Breite der Frankiermaschine ein. Auf der anderen Hälfte sind links vorne eine austauschbare Blende 22 und rechts vorne eine Gehäuseklappe 23 angeordnet. Die Oberfläche der anderen Hälfte der Breite der Frankiermaschine weist einen von der Frontseite beginnenden pultförmigen Anstieg auf, und geht in y-Richtung in die tonnenförmig gewölbte Form der Oberfläche der austauschbaren Blende 21 über. Die austauschbare Blende 22 ist ebenfalls auf der Oberseite gewölbt, annähernd quadratisch und nimmt ca. ein Viertel der gesamten Oberfläche auf der Gehäuseoberschale 2 der Frankiermaschine 1 ein. Die austauschbare Blende 22 reicht von einer Vorderseite der Frankiermaschine 1 bis zur Hälfte der Breite der Oberseite der Frankiermaschine y-Richtung und beginnt stromaufwärts und endet etwa bei der Hälfte der Länge in der Mitte der Frankiermaschine 1. Die austauschbare Blende 22 der Frankiermaschine 1 weist in der Mitte der Hälfte der Länge in x-Richtung und im zweiten Drittel der Hälfte der Breite der Oberseite der Frankiermaschine in y-Richtung eine erste Öffnung auf, die durch ein Display des Displaymoduls verdeckt wird, wobei das Display in z-Richtung durch die erste Öffnung, d.h. nach oben zum Bediener hindurchragt. Die austauschbare Blende 22 weist außerdem in der Mitte der Hälfte der Länge und zwischen der ersten Öffnung und einer Kante der austauschbare Blende 22 an der Vorderseite der Frankiermaschine 1 eine zweite Öffnung auf, durch welche ein Einschalttaster 4 nach oben hindurchragt. Eine Gehäuseklappe 23 ist vorn rechts neben der austauschbaren Blende 22 angeordnet. Unter der geschlossenen Gehäuseklappe 23 ist ein Klappensensor 19 nicht sichtbar angeordnet, der ein Öffnen bzw. Schließen der Gehäuseklappe 23 detektiert.

In der perspektivischen Darstellung liegt "links" eine stromaufwärts liegende Seite (nicht sichtbar) der Frankiermaschine 1 und des Displaygehäuserahmens des Displaymoduls, wobei das Display in einer ersten Position 5a mit einem maximalen Neigungswinkel gezeichnet ist. Außerdem wurde das Display mit einer Strich-Punkt-Linie in einer zweiten Position 5b gezeichnet, wobei das Display einen minimalen Neigungswinkel zu einer Horizontalen aufweist. Der Neigungswinkel des Displays ist innerhalb eines schwenkbaren Bereichs, beispielsweise von 30° bis 80°, veränderbar.

Nach einem Einschalten der Frankiermaschine 1 bzw. des Gutverarbeitungsgeräts wird das Display ausgehend von der zweiten Position 5b gesteuert durch die Steuereinheit mittels eines Motors motorisch in Richtung der ersten Position 5a geschwenkt. Der aktuell erreichte Neigungswinkel wird durch einen Sensor in Zeitabständen gemessen und in der Steuereinheit überwacht. Im Ergebnis wird automatisch ein vorbestimmter Neigungswinkel des Displays zu einer Horizontalen eingestellt, wobei der Istwert des Neigungswinkels einem dem Bediener zugeordnet gespeicherten Sollwert des Neigungswinkels entspricht. Einer Vielzahl von Bedienern können individuell unterschiedliche Neigungswinkel-Sollwerte zugeordnet gespeichert werden, wobei die Neigung des Displays motorisch und/oder manuell korrigiert werden kann. Von einem Bediener kann der gewünschte Neigungswinkel individuell auch via Display manuell eingestellt werden, weil das Display als Touchscreen ausgebildet ist. Ein Schirmbild des Touchscreen-Displays oder der Rand des Displays enthält dafür ein vorbestimmtes Touchscreen-Eingabefeld zur motorischen Verstellung der DisplayNeigung.

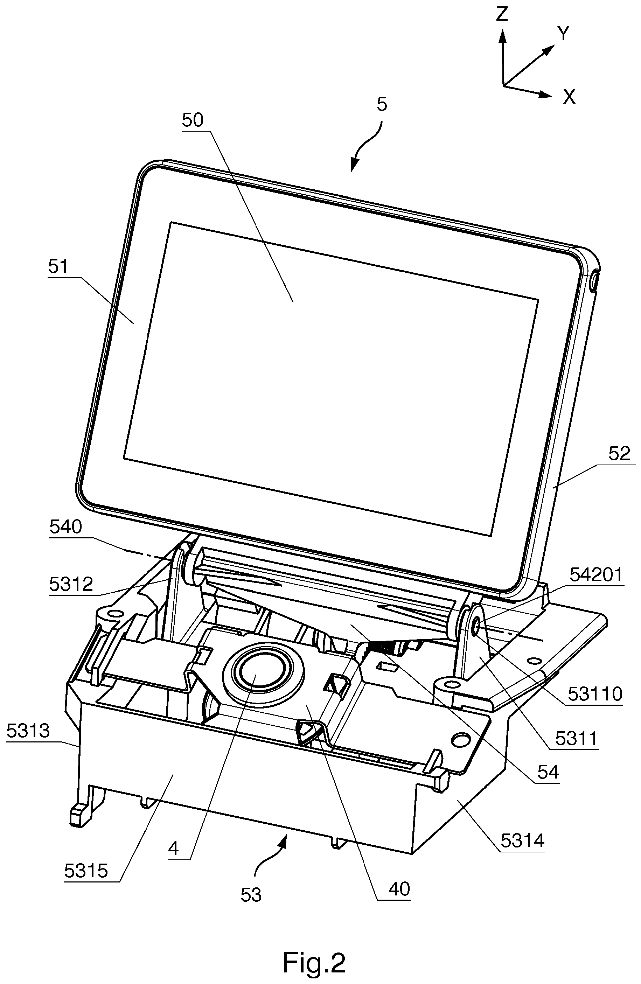

In der Fig. 2 ist eine perspektivische Darstellung des Displaymoduls 5 von vorn rechts oben gezeigt. Auf einem kastenförmigen Displaymodulträger 53 ist ein Displayhalter 54 um eine zur y-Richtung orthogonalen Schwenkachse 540 schwenkbar montiert. An beiden Seitenwänden 5313, 5314 eines Rahmens 5313, 5314, 5315 (5316 verdeckt) des Displaymodulträgers 53 und parallel zur Transportrichtung x ist ein Halteblech 40 für einen Einschalttaster 4 in der Nähe der Vorderseite 5315 des Displaymodulträgers 5 montiert. Das Display weist einen Displayrand 51 um einen Touchscreen-Displaybildschirm 50 sowie einen Displaygehäuserahmen 52 auf, wobei die Rückseite (Fig. 3) des Displaygehäuserahmens 52 an dem Displayhalter 54 montiert ist. Ein Haltelappen 5311 ist stromabwärts an der einen Seitenwand 5314 des Rahmens des Displaymodulträgers 53 montiert und ein Haltelappen 5312 ist stromaufwärts an der anderen Seitenwand 5313 des Rahmens des Displaymodulträgers 53 montiert ist. Beide Haltelappen 5311, 5312 stehen in z-Richtung (nach oben) vom Rahmen ab. In dem jeweilig abstehenden Ende der beiden Haltelappen 5311, 5312 ist jeweils eine Bohrung 53110, (53120 verdeckt) eingearbeitet. Eine Drehachse 540 des Displayhalters 54 verläuft durch die Mitte der beiden Bohrungen. Der Displayhalter 54 weist zwei Drehzapfen 54201, (54202 verdeckt) auf, durch deren Mitte die Drehachse 540 verläuft, wenn der Displayhalter 54 - in der gezeichneten Weise - auf dem Rahmen 5313, 5314, 5315 (5316 verdeckt) des Displaymodulträgers 53 montiert ist.

In der Fig. 3 ist eine perspektivische Darstellung des Displaymoduls 5 von hinten rechts oben, mit einem maximalen Neigungswinkel des Displays gezeigt. Das Displaymodul 5 weist den Rahmen 5314, 5316 (5313, 5315 verdeckt) des Displaymodulträgers 53 und den schwenkbaren Displayhalter 54 auf, der an einer Rückseitenwand 520 des Displaygehäuserahmens 52 montiert ist. Die Rückseitenwand 5316 und die Seitenwand 5314 des Rahmens des Displaymodulträgers 53 und der schwenkbare Displayhalter 54 sind aufgeschnitten gezeichnet, damit mehr Details sichtbar werden. Es ist vorgesehen, dass das Displaygehäuse 52 oder der Displayhalter 54 einen Sensor 521 zur Neigungswinkelermittlung aufweist. Der Sensor 521 ist vorzugsweise unter der Rückseitenwand des Displaygehäuserahmens 52 auf einem flexiblen Bandkabel 502 (oder 501) montiert und ragt in Richtung des schwenkbaren Displayhalters 54 der in seinem Inneren auch die flexiblen Bandkabel 501 und 502 aufnimmt.

Der schwenkbare Displayhalter 54 ist als Winkelhebel geformt, mit einem spitzen Winkel zwischen einem Kraftarm 542 und einem Lastarm 543, wobei zwei äußere Seitenwände an einem Ende eines Kraftarms 542 des Displayhalters 54 je einem Drehzapfen (Fig. 2) aufweisen, die in seitlichen Bohrungen an dem Ende der am Rahmen montierten Lappen 5311, 5312 drehbar gelagert sind und wobei das jeweils andere Ende des Kraftarms 542 in y-Richtung weist und ein Anschlagsknie 5421 aufweist. Der schwenkbare Displayhalter 54 ist innen hohl. Zwei innere Seitenwände sind am jeweils anderen Ende des Kraftarmes 542 und am Lastarm 543 vorgesehen, die einen Hohlraum stromaufwärts und stromabwärts begrenzen, wobei der Hohlraum die flexiblen Bandkabel 501 und 502 aufnimmt. Ein Anschlagsknie 5421 ist an der mindestens einen der äußeren Seitenwände ausgebildet bzw. geformt. Ein nach hinten und unten hervortretendes Zahnradteilsegment 541 ist am jeweils anderen Ende des Kraftarmes 542 in der Mitte eines Abstandes zwischen den beiden inneren Seitenwänden montiert oder angeformt. Der vom Kraftarm 542 abgewinkelte Lastarm 543 des Displayhalters 54 stellt eine mechanische Verbindung einerseits zwischen dem Anschlagsknie 5421 und andererseits dem Displaygehäuse her. Vorzugsweise ist jeweils ein Anschlagsknie 5421 an den beiden äußeren Seitenwänden ausgebildet bzw. geformt, wobei beide Anschlagsknie 5421 spiegelsymmetrisch zur Mitte des Abstandes zwischen den beiden inneren Seitenwänden liegen.

Alternativ ist ein Sensor 521 zur Neigungswinkeldetektion im Innern des Lastarms 543 des Displayhalters 54 angeordnet. An dem Kraftarm 542 des Displayhalters sind beidseitig kreisrunde Lagerzapfen angeformt (Fig.2), durch deren Kreismittelpunkt die Schwenkachse verläuft (Fig.2).

Die Mechanik des Displaymoduls wird durch den Überlastschutz vor Beschädigungen geschützt, die durch ein manuelles Schwenken bei zu hoher Krafteinwirkung entstehen könnten. Der Überlastschutz ist als Reib- oder Rutschkupplung ausgebildet. Ein Motorhalter 533 ist zwischen der Rückseitenwand 5316 des Rahmens und einem Boden 5319 des Displaymodulträgers 53 montiert. Der Motorhalter 533 hält einen Motor M4 (Fig. 6) mit Getriebe in einer vorbestimmten Position, so dass eine Getriebewelle 532 parallel zur Transportrichtung x ausgerichtet ist (Fig. 6). Die Fig. 3 zeigt ein Detail A mit der Rutschkupplung. Das Zahnradteilsegment 541 steht mit einem Zahnritzel 534 in Eingriff. Das Zahnritzel 534 weist einen Kragen 5341 auf, der durch die Federkraft einer Druckfeder 536 eine Reibscheibe 535 an einen Kragen 5371 einer Kupplungswelle 537 presst. Die Kupplungswelle 537 ist auf die Getriebewelle 532 des Motors M4 (Fig. 6) gesteckt und mit letzterer form- und kraftschlüssig verbunden. Das Getriebe ist vorzugsweise ein selbsthemmendes Getriebe. Unter dem Begriff selbsthemmend soll hierbei verstanden werden, dass nur von der Motorseite die Getriebewelle bewegt werden kann und die Displayneigung unverändert bleibt, wenn der Motor nicht angesteuert wird und keine manuelle Verstellung der Displayneigung vorgenommen wird.

Die Fig. 4 zeigt eine Seitenansicht des geschnittenen Displaymoduls von rechts, mit einem maximalen Neigungswinkel des Displays. Die Rückseitenwand 5316 und der Boden 5319 des Rahmens 531 des Displaymodulträgers 53 sind unmittelbar vor dem Zahnradteilsegment 541 geschnitten gezeichnet.

Eine Anschlagsnase 5411 ist vom Zahnradteilsegment 541 abstehend angeordnet und schlägt an eine zweite Anschlagskontur 5318 des Displaymodulträgers an, die am Boden 5319 des Rahmens 531 angeformt ist und in z-Richtung absteht. Der Displayhalter 54 hat den Displaybildschirm 50 in eine extreme Position gedreht, so dass eine Neigungsgerade N, die auf eine nach vorn gerichtete Oberfläche des Displaygehäuserahmens 52 bzw. auf die Oberfläche des Displaybildschirms 50 gelegt ist, in einem maximalen Neigungswinkel $\alpha_{max}$ zu einer Horizontalen H gebracht ist, die einen Drehpunkt der Schwenkachse 540 des Displayhalters 54 schneidet und sich parallel zur y-Richtung erstreckt.

In der Fig. 5 ist eine Seitenansicht einer geschnittenen Displaymoduls von rechts, mit einem minimalen Neigungswinkel des Displays dargestellt. Die Rückseitenwand 5316 und der Boden 5319 des Rahmens 531 des Displaymodulträgers 53 sind unmittelbar vor dem Zahnradteilsegment 541 geschnitten gezeichnet.

Der Displaygehäuserahmen 52 ist gemäß der Fig.5 soweit geschwenkt dargestellt, dass das Anschlagsknie 5421 des Displayhalters eine erste Anschlagskontur 5317 an der Rückseitenwand 5316 des Rahmens 531 des Displaymodulträgers berührt. In dieser Lage liegt die Neigungsgerade N der Oberfläche des Displaybildschirms 50 in einem minimalen Neigungswinkel $\alpha_{min}$ zu einer Horizontalen H die den Drehpunkt der Schwenkachse 540 (Fig. 2) des Displayhalters 54 schneidet und sich parallel zur y-Richtung erstreckt.

Die Fig. 6 zeigt eine perspektivische und gesprengte Darstellung eines Überlastschutzes des Displaymoduls von hinten rechts oben. Der Überlastschutz ist als Einscheiben-Rutschkupplung 534, 535, 536, 537, 538, 539 ausgebildet. Ein Motor M4 weist ein Getriebe auf und kann mittels Schrauben 5331 an dem Motorhalter 533 befestigt werden. Die Kupplungswelle 537 hat an einem Ende eine Steckstelle und kann mittels dieser auf die Getriebewelle 532 des Motors M4 gesteckt und form- und kraftschlüssig verbunden werden. Die Kupplungswelle 537 hat einen Kragen 5371, der rund um die Steckstelle ausgebildet ist, wobei die Steckstelle zum Motor M4 hin ausgerichtet ist. Die Kupplungswelle 537 ist zylindrisch geformt und an einer vom Motor M4 weg gerichteten Stelle abgestuft. Der Durchmesser D1 der Kupplungswelle 537 ist in einem ersten Abschnitt vor der Abstufung größer als der Durchmesser D2 in einem zweiten Abschnitt, der in Transportrichtung x hinter der Abstufung beginnt. In einem kleinen Abstand d von dem anderen vom Motor M4 weg gerichteten Ende weist die Kupplungswelle 537 einen Einstich 5372 auf. Eine zentrale Bohrung des Zahnritzels 534 ist an den Durchmesser D1 angepasst.

Es ist vorgesehen, dass die Druckfeder 536 auf dem zweiten Abschnitt der Kupplungswelle 537 montiert ist, so dass aufgrund der Federkraft der Druckfeder 536 auf eine Stirnseite des Zahnritzels 534 drückt und dadurch ein der Stirnseite gegenüber liegender Kragen 5341 des Zahnritzels 534 die Reibscheibe 535 auf den Kragen 5371 der Kupplungswelle 537 gedrückt wird und dass die Kupplungswelle 537 einen Einstich 5372 für eine Montage der Sicherungsscheibe 539 aufweist.

Der Einstich 5372 an der Kupplungswelle 537 ist für eine Montage der Sicherungsscheibe 539 erforderlich. Zwischen der Sicherungsscheibe 539 und der Druckfeder 536 kann eine Unterlegscheibe 538 auf der Kupplungswelle 537 montiert werden.

Die Fig. 7 zeigt ein vereinfachtes Blockschaltbild einer Steuereinheit 7, mit einer Central Prozessor Unit (CPU) 71, einem Programmspeicher (ROM) 72, einem Arbeitsspeicher (RAM) 73, einer Ein-/Ausgabeschaltung 74 und einem nicht-flüchtigen Speicher (NVM) 5, welche ebenfalls mit der CPU 71 betriebsmäßig verbunden sind. Die Ein-/Ausgabeschaltung 74 ist vorzugsweise als ein Field Programmable Gate Array (FPGA) realisiert, dass mit einem Einschalter 4, Sensoren S1 bis S4, einer Anzahl an Motoren M1 bis M4 und über ein Pen-Driver-Board 6 mit einem Tintenstrahldruckkopf des Gutverarbeitungsgeräts betriebsmäßig verbunden ist. Der Sensor 521 gibt detektierte Daten über ein flexibles Bandkabel 501 aus und übergibt die detektierten Daten der Steuereinheit 7. Er ist über das flexible Bandkabel 501 elektrisch mit der Ein-/Ausgabeschaltung 74 der Steuereinheit 7 verbunden. Die Steuereinheit 7 ist zur Ausgabe von digitalen Bilddaten über ein flexibles Bandkabel 502 elektrisch mit dem Displaybildschirm 50 verbunden, der die digitalen Bilddaten anzeigt. Die CPU 71 der Steuereinheit ist über die Ein-/ Ausgabeschaltung 74 mit dem Sensor 521 elektrisch verbunden, um den eingestellten Neigungswinkel des Displays zu ermitteln und um anschließend den gewünschten Neigungswinkel über einen Motor elektronisch ansteuern zu können. Ein geeigneter Sensor ist beispielsweise ein Beschleunigungssensor, vorzugsweise ein ultra-low-power high-performance 3-axis "nano" accelerometer. Miniaturisierte Sensoren sind meist mit piezoelektrischen Sensoren oder als MEMS (Micro-Electro-Mechanical System) aufgebaut. Die MEMS werden aus Silicium hergestellt und sind Feder-Masse-Systeme, bei denen die "Federn" nur wenige μm breite Silicium-Stege sind und auch die Masse aus Silicium hergestellt ist. Durch die Auslenkung bei Beschleunigung kann zwischen dem gefedert aufgehängten Teil und einer festen Bezugselektrode eine Änderung der elektrischen Kapazität gemessen werden. Der gesamte Messbereich entspricht einer Kapazitätsänderung von ca. 1 pF. Die Elektronik zur Auswertung dieser kleinen Kapazitätsänderung wird auf demselben integrierten Schaltkreis (IC) untergebracht. Der Sensor 521 ist vorzugsweise ein Beschleunigungssensor vom Typ LIS3DH. Der LIS3DH ist ein ultra-low-power Hochleistungs-Drei-Achsen-Linear-Beschleunigungssensor mit digitaler I2C/SPI-Schnittstelle. Der Sensor 521 verfügt über energiesparende Betriebsmodi, die erweiterte Energiesparfunktionen und intelligente integrierte Funktionen ermöglichen. Der miniaturisierte Sensor ist als MEMS (Micro-Electro-Mechanical System) aufgebaut und wird auf dem flexiblen Bandkabel 501 montiert und mit ausgewählten Leitungen des flexiblen Bandkabels 501 elektrisch verbunden. Der Sensor wird zusammen mit dem Touchscreen-Display und den flexiblen Bandkabeln 501, 502 in das Displaygehäuse eingebaut und ist elektrisch über das flexible Bandkabel 501 mit der Ein-/ Ausgabeschaltung 74 der Steuereinheit 7 verbunden. Das Touchscreen-Display ist elektrisch über ein flexibles Bandkabel 502 mit der CPU 71 der Steuereinheit 7 verbunden.

Der von dem Beschleunigungssensor in einem jeden Verstellzustand der Neigung des Displays zugehörig gemessene Istwert entspricht dem Neigungswinkel $\alpha$. Er wird in Zeitabständen von der CPU 71 der Steuereinheit 7 mit einem in dem nicht-flüchtigen Speicher NVM 75 der Steuereinheit des Gutverarbeitungsgeräts nicht-flüchtig gespeicherten Sollwert verglichen, wobei der Sollwert dem gewünschten Neigungswinkel entspricht, um den Motor M4 entsprechend anzusteuern. Als Motor kann beispielsweise ein Gleichstrommotor oder ein Schrittmotor verwendet werden. Der Touchscreen-Displaybildschirm 50 zeigt nach dem Einschalten der Frankiermaschine beliebige Symbole im sichtbaren Bereich des Displays an. Diese visualisierten Symbole können funktional durch eine direkte oder indirekte Berührung aktiviert werden. Zwischen dem Displaygehäuserahmen und dem visualisierbaren Bereich des Displays, also im Randbereich des Displays kann ein fester Bereich mit permanenten Symbolen vorbelegt werden. Solche Symbole sind für Funktionen vorgesehen, die oft, häufig oder immer aktivierbar sein müssen, also aus jedem Bildschirmanzeigemodus heraus. Für ein resistives oder kapazitives Display können solche Bereiche durch Erweiterung des Touchbereiches der auf dem Displaybildschirm liegenden Touchfolie aktiviert werden, ohne das unter dem Displayrand 51 (Fig. 2) eine aktive Anzeigefläche realisiert ist.

Der Vorteil ist eine immer vorhandene Möglichkeit eine bestimmte Funktion (Rücksprungadresse, Home-Menü, Helligkeits-, Lautstärkeregelung, Bewegen des Displays, usw.) zu hinterlegen und egal aus welchem Screen/Modus zu erreichen. Aktiv kann dies durch eine Symbolbedruckung auf dem Glassubstrat des Displayrandes 51 unterstützt oder als Hidden Button ausgeführt werden.

Alternativ zu einem Beschleunigungssensor (Accelometer) kann ebenso ein piezoelektrischer Beschleunigungssensor, ein Drehgeber, ein Winkelsensor mit Hall-Element, ein Lagesensor, ein Kippsensor oder Neigungssensor eingesetzt werden.

Als Eingabemittel zur Eingabe von Identitätsmerkmalen kann ein Fingerprintsensor verwendet werden. Der Fingerprintsensor kann im Touchbereich des Touchscreen-Displays integriert sein.

In der Fig. 8 ist ein Touchscreen-Display mit zusätzlichen Betätigungsmitteln 511 und 512 an der rechten und linken Seite des Displayrands 51 und einem weiteren Sensor 519 an einem oberen Abschnitt des Displayrands 51 dargestellt. Der Displayrand 51 ist mit einer berührungsempfindlichen Folie (Touchfolie) überzogen und wird vom Displaygehäuse 52 eingefasst.

In der Fig. 9 ist ein Display mit zusätzlichen Betätigungsmitteln 513, 514 und 515 an einem unteren Abschnitt des Displayrands 51 dargestellt. Mit dem zusätzlichen Betätigungsmittel 515 kann die Lautstärke einer Wiedergabequelle an die Bedürfnisse des Bedieners angepasst werden. Mit dem zusätzlichen Betätigungsmittel 514 kann die Neigung des Displays an den von einem Bediener gewünschten Betrachtungswinkel des Displaybildschirmes 50 angepasst werden.

Die smarte Frankiermaschine wird in der Bedienung mit dem zusätzlichen Betätigungsmittel 515 und einem weiteren Lichtsensor 519 weiter verbessert, wobei beide Mittel auf dem Displayrand angeordnet sind. Mit dem zusätzlichen Betätigungsmittel 515 kann die Helligkeit der Anzeigen des Displays verändert werden. Das ist auch deshalb vorteilhaft, weil damit Lichtreflexionen überstrahlt werden können und zwar unabhängig von dem jeweils vom Display angezeigten Schirmbild. Die Lichtsensorik gestattet eine automatische Anpassung der Lichtstärke des Displays innerhalb eines Raumwinkels $\Omega$ an die Umgebungslichtstärke.

Alternativ können die zusätzlichen Betätigungsmittel - in nicht gezeigter Weise - auch in einem oberen Abschnitt des Displayrands 51 oder in ausgewählten oder in allen Abschnitten des Displayrands 51 angeordnet werden. Die zusätzlichen Betätigungsmittel 511 - 515 auf dem Displayrand 51 werden erzeugt, indem eine Touchfolie auf den Displayrand 51 aufgelegt wird.

Eine smarte Frankiermaschine kann in einer weiteren Variante mit akustischen Mitteln und einem Sprachassistenten ausgestattet werden, um die Bedienung der Frankiermaschine durch eine Sprachsteuerung weiter zu verbessern, indem der optimale Neigungswinkel des Displays benutzerspezifisch via Sprachsteuerung eingestellt wird.

Fig. 10a ist eine schematische Darstellung eines erfindungsgemäßen Neigungssensors.

Der Neigungssensor kann ein 3-Achsenbeschleunigungssensor wie beispielsweise ein MEMS-Beschleunigungssensor sein.

Bei einer Verwendung eines Neigungssensors können 2 Achsen zur genaueren Berechnung des Neigungswinkels ($\alpha$) und zur Reduzierung von störenden Einflüssen durch mechanische Schwingungen benutzt werden.

Achse 1: orthogonal zur Drehachse und horizontal ($acc_y$), wobei $acc_y$ der Accelometer-Wert in y-Richtung ist (Fig. 1a).

Achse 2: orthogonal zur Drehachse und vertikal ($acc_z$), wobei $acc_z$ der Accelometer-Wert in z-Richtung ist (Fig. 1a).

Die dritte Beschleunigungsachse mit dem Accelometer-Wert ($acc_x$) in x-Richtung ist parallel zur Drehachse und wird nicht in die Berechnungen miteinbezogen.

Die beiden genannten Achsen können in der trigonometrischen Tangenz-Funktion verwendet werden.

Angewandt auf einen Beschleunigungssensor mit der Achsenausrichtung wie in der Fig. 10a gezeigt, lautet die Formel:

$$\tan(\alpha) = \frac{acc_z}{acc_y}, acc_y \neq 0$$

Für den Spezialfall $acc_y = 0 \rightarrow \alpha = 90°$ kann die Berechnung nicht angewandt werden. Das kann durch eine Abfrage im Programm sichergestellt werden. Dieser Spezialfall tritt aber in der Regel nicht ein. Die Neigung eines Neigungssensors liegt im Ausführungsbeispiel immer im Winkel zu einer Horizontalen. Der Accelometer-Wert entspricht dem Sinus des Neigungswinkels $\alpha$. Bei dem Spezialfall liegt der Messwert g = 1 in Gravitationsrichtung. Im Ausführungsbeispiel g<1 in Abhängigkeit von der Neigung. Es gilt:

$$Sin(\alpha) = acc_z / g$$

Das erfindungsgemäße Verfahren soll durch zwei Beispiele verdeutlicht werden:

Gegeben seien bei einem Winkel von ca. 26°:

Achse 1: Beschleunigung $acc_y = 0,9g$

Achse 2: Beschleunigung $acc_y = 0,44g$

Dann ergibt

$$\tan(\alpha) = \frac{acc_z}{acc_y} \rightarrow \arctan\left(\frac{acc_z}{acc_y}\right) = arctan\left(\frac{0{,}44}{0{,}9}\right) = 26{,}05° = \alpha$$

Weiterhin seien bei einem Winkel von ca. 84°:

Achse 1: Beschleunigung $acc_y$ = 0,1$g$

Achsel 2: Beschleunigung $acc_z$ = 0,99$g$

Das Ergebnis ohne Zurhilfenahme beider Beschleunigungsachsen (also in nicht erfindungsgemäßer Weise) am Beispiel mit einem Winkel von ca. 84°, also nur mit der zweiten Beschleunigungsachse $acc_z$ = 0,44g ergibt:

$$\sin(\alpha) = acc_z \rightarrow \arcsin(acc_z) = \arcsin(0{,}99) = 81{,}9° = \alpha$$

Das Ergebnis der Berechnung nach dem Stand der Technik weicht um mehr als 2° vom tatsächlichen Wert ab.
Das Ergebnis mit dem erfindungsgemäßen Verfahren ergibt:

$$\tan(\alpha) = \frac{acc_z}{acc_y} \rightarrow \arctan\left(\frac{acc_z}{acc_y}\right) = arctan\left(\frac{0{,}99}{0{,}1}\right) = 84{,}2 = \alpha$$

Daraus wird deutlich, dass die gestellte Aufgabe in einer deutlich genaueren Weise gelöst wird als aus dem Stand der Technik bekannt.
Die trigonometrische Berechnungen, insbesondere des Tangenz, können je nach Prozessor sehr viel Ressourcen und Zeit in Anspruch nehmen. Daher bietet sich diese Ausführungsform für ressourcen- und zeitsensitive Anwendungen an.
Fig. 10b beschreibt das Auswahlkriterium 7a des zweiten Ausführungsbeispiels. Dabei erfolgt eine Auswahl der geeigneteren Beschleunigungsachse in Abhängig der Linearität. Es wird unterschieden zwischen einem ersten Auswahlschritt 7b und einem zweiten Auswahlschritt 7c. Dabei gilt, dass wenn der Accelometer-Wert accz größer als der Sinus von 45° ist, dann wird der Kosinus des Neigungswinkels $\alpha$ verwendet. Ansonsten wird auf den zweiten Accelometer-Wert accz gewechselt und dabei der Sinus des Neigungswinkels $\alpha$ verwendet. Das Auswahlkriterium 7a ist erforderlich, weil die Messung möglichst im linearen Teil der Kurve erfolgen soll (siehe Fig. 11).
Auch bei der dieser Ausführungsform sollen zwei Beispiele das erfindungsgemäßen Verfahren verdeutlichen:

Gegeben seien bei einem Winkel von ca. 26°:

Achse 1: Beschleunigung $acc_y$ = 0,9g

Achse 2: Beschleunigung $acc_z$ = 0,44$g$

Dann ergibt

$acc_z$ < sin(45°) → sin($\alpha$) = $acc_z$ → arcsin($acc_z$) = arcsin(0,44) = 26,1° = $\alpha$

Weiterhin seien bei einem Winkel von ca. 84°:

Achse 1: Beschleunigung $acc_y$ = 0,1$g$

Achsel 2: Beschleunigung $acc_y$ = 0,99$g$

Das Ergebnis mit dem erfindungsgemäßen Verfahren nach der in Fig. 11 dargestellten Ausführungsform wäre:

$acc_z$ > sin(45°) → cos($\alpha$) = $acc_y$ → arccos($acc_y$) = arccos(0,1) = 84,3° = $\alpha$

Auch hier wird deutlich, dass die gestellte Aufgabe in einer deutlich genaueren Weise gelöst wird.

Die dargestellten Werte gehen aus der Fig. 11 hervor. Dort wird die Umrechnung der Beschleunigung (Accelometer-Werte) in Neigungswinkel beschrieben.

Die Erfindung ist nicht auf die vorliegend näher erläuterte Ausführungsform beschränkt, da offensichtlich weitere andere Ausführungen der Erfindung entwickelt bzw. eingesetzt werden können, die - vom gleichen Grundgedanken der Erfindung ausgehend - von den anliegenden Patentansprüchen umfasst werden.

## Patentansprüche

1. Gutverarbeitungsgerät mit einem Displaymodul (5) und mit einer Steuereinheit (7) und mit einem Motor (M4), wobei

   • das Displaymodul (5), mit einem Displaymodulträger (53), mit einem schwenkbaren Displayhalter (54) und mit einem Displaygehäuse (52, 520) ausgestattet ist, wobei ein Displayrand (51) um einen -Displaybildschirm (50) angeordnet ist und ein Displaygehäuserahmen (52) den Displayrand (51) umgibt, wobei mindestens ein Betätigungsmittel (511 - 515) des Displaymoduls (5) vorgesehen ist, um ein motorisches Schwenken des Displaybildschirms (50) manuell auszulösen,
   • das Gutverarbeitungsgerät ferner Eingabemittel zur Eingabe von Identitätsmerkmalen oder einer persönlichen Identifikationsnummern (PIN) eines Bedieners umfasst, die Steuereinheit (7) einen Prozessor (71), einen Programmspeicher (72), einen Arbeitsspeicher (73), eine Ein-/Ausgabeschaltung (74) und einen nicht-flüchtigen Speicher (75) aufweist, wobei der nicht-flüchtige Speicher (75) zur Speicherung von Einstelldaten vorgesehen ist und der Programmspeicher (72) ein Programm zur automatischen Einstellung einer von einem jeweiligen Bediener des Geräts abhängigen Displayneigung aufweist,
   • mindestens ein Sensor (521) und die Steuereinheit (7) zur Detektion einer Neigung einer auf einer Oberfläche des Displaybildschirms (50) liegenden Neigungsgeraden N zu einer Horizontalen H in y-Richtung im Displaymodul (5) vorgesehen sind, wobei der Sensor (521) und der Motor (M4) elektrisch über die Ein- /Ausgabeschaltung (74) mit der Steuereinheit (7) verbunden sind, wobei der Motor (M4) zum motorischen Schwenken des Displaybildschirms mit einem selbsthemmenden Getriebe ausgestattet ist, das die Umdrehungen des Motors untersetzt und über eine Getriebewelle (532) an einen Überlastschutz abgibt
   • ein Überlastschutz als Reib- oder Rutschkupplung auf einer Getriebewelle angeordnet ist, wobei ein Zahnritzel (534) der Reib- oder Rutschkupplung (534, 535, 536, 537, 538, 539) vorgesehen ist, dass mit einem Zahnradteilsegment (541) des schwenkbaren Displayhalters (54) in Eingriff gebracht ist.

2. Gutverarbeitungsgerät, nach Anspruch 1, **dadurch gekennzeichnet, dass** das Displaygehäuse aus dem Displaygehäuserahmen (52) mit einer Rückwand (520) besteht, wobei das Displaygehäuse oder der Displayhalter (54) mindestens den Sensor (521) aufweist.

3. Gutverarbeitungsgerät, nach Anspruch 2, **dadurch gekennzeichnet, dass** der Motor (M4) ein Schrittmotor ist und dass der Überlastschutz als Reib- oder Rutschkupplung (534, 535, 536, 537, 538, 539) ausgebildet ist, wobei die Reib- oder Rutschkupplung (534, 535, 536, 537, 538, 539) eine Einscheiben-Rutschkupplung ist und die Einscheiben-Rutschkupplung ein Zahnritzel (534), eine Reibscheibe (535), eine Druckfeder (536), eine Kupplungswelle (537), eine Unterlegscheibe (538) und eine Sicherungsscheibe (539) umfasst, wobei die Kupplungswelle (537) einen zweiten Abschnitt mit einem Durchmesser D2 aufweist.

4. Gutverarbeitungsgerät, nach Anspruch 3, **dadurch gekennzeichnet, dass** die Druckfeder (536) auf dem zweiten Abschnitt der Kupplungswelle (537) montiert ist, so dass aufgrund der Federkraft der Druckfeder (536) auf eine Stirnseite des Zahnritzels (534) drückt und dadurch ein der Stirnseite gegenüber liegender Kragen (5341) des Zahnritzels (534) die Reibscheibe (535) auf den Kragen (5371) der Kupplungswelle (537) gedrückt wird und dass die Kupplungswelle (537) einen Einstich (5372) für eine Montage der Sicherungsscheibe (539) aufweist.

5. Gutverarbeitungsgerät, nach Anspruch1, **dadurch gekennzeichnet, dass** der Überlastschutz als Mehrscheiben Rutschkupplung ausgebildet ist.

6. Gutverarbeitungsgerät, nach Anspruch 1, **dadurch gekennzeichnet, dass** der Sensor (521) zur Eingabe von detektierten Daten in die Steuereinheit (7) über ein flexibles Bandkabel (501) elektrisch mit der Ein-/Ausgabeschaltung (74) der Steuereinheit (7) und die Steuereinheit (7) zur Ausgabe von digitalen Bilddaten über ein flexibles Bandkabel (502) elektrisch mit dem Displaybildschirm (50) verbunden ist.

7. Gutverarbeitungsgerät, nach Anspruch 6, **dadurch gekennzeichnet, dass** die detektierten Daten des Sensors (521) einem Neigungswinkel α der auf der Oberfläche des Displaybildschirms (50) liegenden Neigungsgeraden N zu der Horizontalen H entsprechen, wobei die Horizontale H in y-Richtung orthogonal zu einer Transportrichtung x von Druckträgern liegt.

8. Gutverarbeitungsgerät, nach Anspruch 1, **dadurch gekennzeichnet, dass** das mindestens eine zusätzliche Betätigungsmittel (511 - 515) des Displaymoduls (5) auf dem Displayrand (51) angeordnet ist, wobei eine Touchfolie auf den Displayrand (51) aufgelegt wird und dass der Sensor (521) und ein Lichtsensor (519) im Displayrand (51) angeordnet sind.

**Claims**

1. A goods processing apparatus with a display module (5) and with a control unit (7) and with a motor (M4), wherein

   • the display module (5) is equipped with a display module carrier (53), with a pivotable display holder (54) and with a display housing (52, 520), wherein a display edge (51) is arranged around a display screen (50) and a display housing frame (52) surrounds the display edge (51), wherein at least one actuating means (511-515) of the display module (5) is provided in order to manually initiate a motorized pivoting movement of the display screen (50),
   • the goods processing apparatus furthermore comprises input means for inputting identity characteristics or a personal identification number (PIN) of a user, wherein the control unit (7) has a processor (71), a program memory (72), a main memory (73), an input/output circuit (74) and a non-volatile memory (75), wherein the non-volatile memory (75) is provided for storing adjustment data and the program memory (72) contains a program for automatically adjusting a display inclination that is dependent on the respective user of the apparatus,
   • at least one sensor (521) and the control unit (7) are provided for detecting an inclination of a straight inclination line N, which lies on a surface of the display screen (50), relative to a horizontal line H in the y-direction in the display module (5), wherein the sensor (521) and the motor (M4) are electrically connected to the control unit (7) via the input/output circuit (74), wherein the motor (M4) is equipped with a self-locking gear unit for pivoting the display screen in a motorized manner and said self-locking gear unit gears down the revolutions of the motor and transmits them to an overload protection via a gear shaft (532),
   • an overload protection in the form of a friction clutch or slipping clutch is arranged on a gear shaft, wherein a pinion (534) of the friction clutch or slipping clutch (534, 535, 536, 537, 538, 539) is provided and engaged with a partial gearwheel segment (541) of the pivotable display holder (54).

2. The goods processing apparatus according to claim 1, **characterized in that** the display housing consists of a display housing frame (52) with a rear wall (520), wherein the display housing or the display holder (54) has at least one sensor (521).

3. The goods processing apparatus according to claim 2, **characterized in that** the motor (M4) is a stepping motor and the overload protection is realized in the form of a friction clutch or slipping clutch (534, 535, 536, 537, 538, 539), wherein the friction clutch or slipping clutch (534, 535, 536, 537, 538, 539) is a single-disk slipping clutch and the single-disk slipping clutch comprises a pinion (534), a friction disk (535), a pressure spring (536), a clutch shaft (537), a washer (538) and a circlip (539), wherein the clutch shaft (537) has a second section with a diameter D2.

4. The goods processing apparatus according to claim 3, **characterized in that** the pressure spring (536) is mounted on the second section of the clutch shaft (537) such that the spring force of the pressure spring (536) presses against a face side of the pinion (534) and thereby due to a collar (5341) of the pinion (534) lying opposite of the face side, the friction disk (535) is pressed on the collar (5371) of the clutch shaft (537), and **in that** the clutch shaft (537) has a recess (5372) for the installation of a circlip (539).

5. The goods processing apparatus according to claim 1, **characterized in that** the overload protection is realized in the form of a multi-disk slipping clutch.

6. The goods processing apparatus according to claim 1, **characterized in that** the sensor (521) is electrically connected to the input/output circuit (74) of the control unit (7) via a flexible ribbon cable (501) in order to input detected data into the control unit (7), and **in that** the control unit (7) is electrically connected to the display screen (50) via a flexible ribbon cable (502) in order to output digital image data.

7.  The goods processing apparatus according to claim 6, **characterized in that** the detected data of the sensor (521) correspond to an angle of inclination α of the straight inclination line N, which lies on the surface of the display screen (50), relative to the horizontal line H, wherein the horizontal line H lies orthogonally to a transport direction x of print substrates in the y-direction.

8.  The goods processing apparatus according to claim 1, **characterized in that** the at least one additional actuating means (511-515) of the display module (5) is arranged on the display edge (51), wherein a touch-sensitive film is applied onto the display edge (51), and **in that** the sensor (521) and a light sensor (519) are arranged in the display edge (51).

**Revendications**

1.  Dispositif de traitement de produits, pourvu d'un afficheur modulaire (5) et pourvu d'une unité de commande (7) et pourvu d'un moteur (M4),

    • l'afficheur modulaire (5), étant équipé d'un support (53) d'afficheur modulaire, pourvu d'un porte-afficheur (54) susceptible de pivoter et pourvu d'un boîtier (52, 520) d'afficheur, un bord (51) d'afficheur étant placé autour d'un écran d'afficheur (50) et un cadre (52) de boîtier d'afficheur entourant le bord (51) d'afficheur, au moins un moyen d'actionnement (511 à 515) de l'afficheur modulaire (5) étant prévu, pour déclencher manuellement un pivotement motorisé de l'écran d'afficheur (50),
    • le dispositif de traitement de produits comprenant par ailleurs un moyen de saisie, destiné à saisir des caractéristiques d'identité ou un identifiant (PIN) personnel d'un opérateur, l'unité de commande (7) comportant un processeur (71), une mémoire de programme (72), une mémoire vive (73), un circuit (74) d'entrée / de sortie et une mémoire (75) non volatile, la mémoire (75) non volatile étant prévue pour mémoriser des données de réglage et la mémoire de programme (72) comportant un programme pour le réglage automatique d'une inclinaison de l'afficheur dépendant de l'opérateur respectif du dispositif,
    • au moins un capteur (521) et l'unité de commande (7) étant prévus dans l'afficheur modulaire (5), pour détecter une inclinaison d'une droite d'inclinaison N située sur une surface de l'écran d'afficheur (50) par rapport à une horizontale H dans la direction Y, le capteur (521) et le moteur (M4) étant électriquement connectés par l'intermédiaire du circuit (74) d'entrée / de sortie avec l'unité de commande (7), pour le pivotement motorisé de l'écran d'afficheur, le moteur (M4) étant équipé d'une transmission autobloquante, qui démultiplie les tours du moteur et les restitue à une protection contre les surcharges par l'intermédiaire d'un arbre de transmission (532),
    • une protection contre les surcharges étant placée en tant qu'accouplement à friction ou accouplement glissant sur un arbre de transmission, un pignon (534) de l'accouplement à friction ou accouplement glissant (534, 535, 536, 537, 538, 539) étant prévu, qui est amené en engagement avec un segment partiel (541) de roue dentée du porte-afficheur (54) pivotant.

2.  Dispositif de traitement de produits, selon la revendication 1, **caractérisé en ce que** le boîtier d'afficheur est constitué du cadre (52) de boîtier d'afficheur pourvu d'une paroi arrière (520), le boîtier d'afficheur ou le porte-afficheur (54) comportant au moins le capteur (521).

3.  Dispositif de traitement de produits, selon la revendication 2, **caractérisé en ce que** le moteur (M4) est un moteur pas à pas et **en ce que** la protection contre les surcharges est conçue sous la forme d'un accouplement à friction ou accouplement glissant (534, 535, 536, 537, 538, 539), l'accouplement à friction ou accouplement glissant (534, 535, 536, 537, 538, 539) étant un accouplement glissant monodisque et l'accouplement glissant monodisque comprenant un pignon (534), un disque de friction (535), un ressort de compression (536), un arbre d'accouplement (537), une rondelle plate (538) et une rondelle de sécurité (539), l'arbre d'accouplement (537) comportant une deuxième partie, avec un diamètre D2.

4.  Dispositif de traitement de produits, selon la revendication 3, **caractérisé en ce que** le ressort de compression (536) est monté sur la deuxième partie de l'arbre d'accouplement (537), de sorte que sous l'effet de la force de ressort, le ressort de compression (536) appuie sur une face frontale du pignon (534) et que de ce fait, par une collerette (5341) du pignon (534) placée à l'opposée de la face frontale, le disque de friction (535) soit appuyé sur la collerette (5371) de l'arbre d'accouplement (537) et **en ce que** l'arbre d'accouplement (537) comporte une gorge (5372) pour un montage de la rondelle de sécurité (539).

5.  Dispositif de traitement de produits, selon la revendication 1, **caractérisé en ce que** la protection contre les surcharges est conçue sous la forme d'un accouplement glissant multidisques.

6. Dispositif de traitement de produits, selon la revendication 1, **caractérisé en ce que** pour saisir des données détectées dans l'unité de commande (7), le capteur (521) est connecté électriquement par l'intermédiaire d'un câble-ruban (501) souple avec le circuit d'entrée / de sortie (74) de l'unité de commande (7) et pour éditer des données-images numériques, l'unité de commande (7) est électriquement connectée par l'intermédiaire d'un câble-ruban (502) souple avec l'écran d'afficheur (50).

7. Dispositif de traitement de produits, selon la revendication 6, **caractérisé en ce que** les données détectées du capteur (521) correspondent à un angle d'inclinaison α de la droite d'inclinaison N située sur la surface de l'écran d'affichage (50) par rapport à l'horizontale H, l'horizontale H se situant dans la direction Y de manière orthogonale par rapport à une direction de transport X de supports d'impression.

8. Dispositif de traitement de produits, selon la revendication 1, **caractérisé en ce que** l'au moins un moyen d'actionnement (511 à 515) additionnel de l'afficheur modulaire (5) est placé sur le bord (51) d'afficheur, une membrane tactile étant posée sur le bord (51) d'afficheur et **en ce que** le capteur (521) et un capteur de lumière (519) sont placés dans le bord (51) d'afficheur.

Fig.1

Fig.2

Detail A

Fig.3

Fig.4

Fig.5

Fig.6

**Fig. 7**

19 S1 S2 S3 S4

6 Pen Driver Board

121 122 12
Druck-kopf | Tinten-kartusche

Touchscreen-Display 50
519 521 5

74

RAM 501 ROM 7
73 502 72
FPGA E/A CPU 71

NVM
75

M1 M2 M3 M4

11 4
220V

**Fig. 8**

519
α- 511
α+ 512
50
51
52

z x

21

Fig. 9

Fig. 10a

Fig. 10b

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 718801 B1
- DE 202010000898 U1
- DE 29822702 U1
- US 2014176424 A
- JP 2017015127 A